# EUROPÄISCHE PATENTSCHRIFT

(11) **EP 1 723 783 B1**
(45) Veröffentlichungstag und Bekanntmachung des Hinweises auf die Patenterteilung: **26.11.2008**
(21) Anmeldenummer: 05707778.6
(22) Anmeldetag: 14.01.2005
(51) Int. Cl.: H04N 5/225

(54) **KAMERA**
CAMERA
CAMERA

(30) Priorität: 03.03.2004 DE 102004010957
(43) Veröffentlichungstag der Anmeldung: 22.11.2006
(73) Patentinhaber: Robert Bosch GmbH, 70442 Stuttgart (DE)
(72) Erfinder: GOTTWALD, Frank, 71287 Weissach (DE); KNEE, Werner, 73728 Esslingen (DE); UFFENKAMP, Volker, 71638 Ludwigsburg (DE); SCHICK, Jens, 71083 Herrenberg (DE)
(86) Internationale Anmeldenummer: PCT/EP2005/050150
(87) Internationale Veröffentlichungsnummer: WO 2005/086473

(56) Entgegenhaltungen:
- EP-A- 0 531 777
- WO-A-02/069618
- GB-A- 975 573
- US-A- 4 918 521
- US-A1- 2003 025 825
- PATENT ABSTRACTS OF JAPAN Bd. 012, Nr. 051 (P-667), 16. Februar 1988 (1988-02-16) & JP 62 198775 A (MATSUSHITA ELECTRIC IND CO LTD), 2. September 1987 (1987-09-02)

## Beschreibung

### Stand der Technik

Die Erfindung betrifft eine Kamera, insbesondere für ein Kraftfahrzeug.

Aus der DE 40 32 927 C2 ist eine Kamera in einem Kraftfahrzeug bekannt. Die Kamera dient zur Verbessung der Sichtverhältnisse und ist hierzu im Bereich des Innenrückspiegels zur Erfassung des Sichtbereiches des Fahrers in Fahrtrichtung montiert.

Aus der US 4,918,521 ist eine Bildaufnahmevorrichtung eines Endoskops bekannt. Die europäische Patentanmeldung EP 0 531 777 A1 offenbart ein Videoendoskop mit Festkörperbildaufnahmevorrichtung. Aus der US 2003/0025825 A1 ist ein Bildaufnahmemodul bekannt. Die WO 02/069618 A2 offenbart eine digitale Kamera mit einer Linse, einem Kameragehäuse und einem Halbleitersensor, wobei die Kamera aus einem homogenen Block aus transparentem Kunststoff besteht. Aus der GB 975 573 ist ein Halbleiterbauelement bekannt.

### Vorteile der Erfindung

Die nachfolgend beschriebene Kamera, insbesondere für ein Kraftfahrzeug, mit den Merkmalen des unabhängigen Patentanspruchs hat den Vorteil, dass ein einfacher Aufbau der Kamera bei gleichzeitig hoher Genauigkeit des Aufbaus der Kamera erreicht wird. Ferner hat die Kamera den Vorteil, dass der Aufbau robust ist, wobei der Aufbau beispielsweise gegenüber Erschütterungen, Vibrationen und Temperaturschwankungen unempfindlich ist. Daneben ist die Kamera mit den Merkmalen des unabhängigen Patentanspruchs preiswert herzustellen. Ferner hat die Verbindung des Bildwandelelements mit einem weiteren Element der Kamera durch wenigstens eine Verblockung den Vorteil, dass Herstellungstoleranzen der Bauelemente durch die Verblockung einfach ausgleichbar sind. Dies hat den Vorteil, dass die Anforderungen an die Genauigkeiten der Bauelemente reduziert ist und dadurch die Herstellungskosten der Bauelemente niedrig sind. Zusammenfassend eignet sich die nachfolgend beschriebene Kamera aufgrund der hohen erreichbaren Genauigkeit, ihrer Robustheit und ihrer preiswerten

Herstellung in besonders vorteilhafter Weise für den Einsatz in einem Kraftfahrzeug, wie einem Personenkraftwagen oder einem Lastkraftwagen.

Die Verblockung ist eine formschlüssige Verbindung, bei der die Verbindung durch Verfestigung eines Verblockmaterials erfolgt, wobei die zu verbindenden Elemente im wesentlichen in Form und/oder Materialeigenschaft unverändert bleiben. Dies führt zu dem Vorteil, dass im Gegensatz zu einer kraflschlüssigen Verbindung, wie einer Klebeverbindung, die Verbindung spannungsfrei erfolgt. Dies resultiert in einer besonders hohen erreichbaren Genauigkeit des Aufbaus der Kamera. Ferner stehen als Verblockmaterial eine Vielzahl an Materialen zur Verfügung, wie beispielsweise 2-Komponenten Epoxy-Materialien, ultraviolettvernetzende Materialien, Materialien auf Kunststoffbasis oder Lötzinn.

Vorteilhaft ist ferner, dass das Bildwandelelement und/oder das weitere Element der Kamera wenigstens ein Verbindungselement mit Hinterschnitt umfasst, da hierdurch die Verblockung besonders robust und langlebig ist Besonders vorteilhaft ist ein Verbindungselement das zylinderförmig ausgeführt ist und/oder wenn der Hinterschnitt senkkopfartig und/oder nagelkopfartig ausgeführt ist, da diese Ausführungen einfach herstellbar sind und zum anderen eine sichere Verbindung durch Verblockung gewährleisten.

Besonders vorteilhaft ist ferner, dass das Bildwandelelement und/oder das weitere Element der Kamera wenigstens einen Behälter umfasst, da dies zu einem gezielten Einbringen des Verblockmaterials während der Herstellung der Kamera beiträgt. Das Verblockmaterial bleibt im wesentlichen auf diesen Behälter beschränkt. Damit wird die Gefahr der Beschädigung oder Verschmutzung von weiteren Elementen der Kamera, wie der Optikeinheit, in vorteilhafter Weise entgegengewirkt. Ferner hat der Behälter den Vorteil, dass nur eine geringe Menge von vorzugsweise 4 mm³ bis 8 mm³ Verblockmaterial pro Verblockung erforderlich ist. Dies trägt ebenfalls zu einer preiswerten Herstellung der Kamera bei.

Vorteilhaft ist, dass das Verblockmaterial mittels Ultraviolett-Strahlung verfestigt ist und/oder das Verblockmaterial wenigstens zwei Komponenten umfasst, die durch Zusammenwirken die Verfestigung des Verblockmaterials bewirken, und/oder das Verblockmaterial mittels Kühlung verfestigt ist, da Verblockmaterialien mit derartigen Eigenschaften sich zum einen für die Herstellung der Kamera besonders eignen, da eine schnelle Aushärtung des Verblockmaterials erreicht wird und dies zu einer kurzen Durchlaufzeit bei der Herstellung der Kamera beiträgt, während zum anderen solche Verblockmaterialien eine Langzeitstabilität der Kamera gewährleisten.

Besonders vorteilhaft ist, dass wenigstens ein Teil der Oberfläche des Bildwandelelements und/oder wenigstens ein Teil der Oberfläche des weiteren Elements der Kamera im Bereich der Verblockung Erhebungen und/oder Senkungen aufweist, da Erhebungen und/oder Senkungen einfach und preiswert anzubringen sind. Besonders vorteilhaft ist, wenn der Teil der innere Oberfläche des Gehäuses, der zur Verblockung verwendet wird, Erhebungen und/oder Senkungen aufweist. Alternativ oder zusätzlich ist es vorteilhaft, wenn der Teil der Leiterplatte und/oder der Teil des Leiterplattenrahmens, die zur Verblockung verwendet werden, Erhebungen und/oder Senkungen aufweisen. Durch Verteilung des Verblockmaterials im Hohlraum zwischen den Erhebungen und/oder Senkungen wird eine spannungsfreie Verbindung durch Formschluss ohne Kraftschluss erreicht.

Eine Kamera bei der das Bildwandelelement und das weitere Element der Kamera zusätzlich durch eine Klebeverbindung verbunden sind hat den Vorteil, dass die Herstellung der Kamera vereinfacht ist, da durch eine schnellwirksame Klebeverbindung das Bildwandelelement mit dem weiteren Element der Kamera schnell und sicher fixierbar ist, um in einem zweiten Verfahrensschritt die dauerhafte Verblockung durchzuführen. Daneben ist es vorteilhaft, die Klebeverbindung für eine dauerhafte Verbindung zu verwenden, da die Stabilität des Aufbaus der Kamera für den laufenden Betrieb und die Lebenszeit der Kamera zusätzlich erhöht wird

Ein kleinster Abstand zwischen dem Bildwandelelement und dem weiteren Element der Kamera im Bereich der Verblockung zwischen 0,5 mm und 3,5 mm trägt in vorteilhafter Weise zu einer besonders hohen Stabilität des Aufbaus der Kamera bei. Ferner ermöglicht dies eine besonders kompakte und damit platzsparende Bauweise der Kamera.

Vorteilhaft ist, wenn das Bildwandelelement wenigstens einen Bildsensor und/oder wenigstens eine Leiterplatte und/oder wenigstens einen Leiterplattenrahmen umfasst. Dabei ist es besonders vorteilhaft, wenn das Bildwandelement über den Leiterplattenrahmen mit dem wenigstens einen weiteren Element der Kamera, beispielsweise dem Gehäuse und/oder der Optikeinheit, durch wenigstens eine Verblockung verbunden ist, da dies zu einem besonders stabilem und damit für die Kraftfahrzeugtechnik geeigneten Aufbau der Kamera führt. Alternativ oder zusätzlich ist die Leiterplatte direkt mit dem wenigstens einen weiteren Element der Kamera, beispielsweise dem Gehäuse und/oder der Optikeinheit, durch wenigstens eine Verblockung verbunden, da hierdurch ein Leiterplattenrahmen entfallen kann und die Kamera kompakt, leicht und kostengünstig ist.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1 einen Querschnitt der Kamera des ersten Ausführungsbeispiels,
- Figur 2 eine perspektivische Ansicht der Kamera des ersten Ausführungsbeispiels,
- Figur 3 eine perspektivische Ansicht der Kamera des ersten Ausführungsbeispiels,
- Figur 4 eine Übersichtszeichnung der Kamera des weiteren Ausführungsbeispiels.

### Beschreibung von Ausführungsbeispielen

Nachfolgend wird eine Kamera, insbesondere für ein Kraftfahrzeug, mit wenigstens einem Bildwandelelement beschrieben. Das Bildwandelelement umfasst wenigstens einen Bildsensor und ist mit wenigstens einem weiteren Element der Kamera, beispielsweise dem Gehäuse der Kamera, durch wenigstens eine Verblockung verbunden.

Kameras für den automobilen Einsatz müssen auf der einen Seite sehr robust, zugleich sehr genau und auf der anderen Seite preiswert sein. Es ist denkbar, eine hohe Genauigkeiten durch zusätzliche Aufwände in der Konstruktion zu erreichen. Als Lösungsmöglichkeiten sind Stifte, Anschlagkanten oder hochgenaue Maßhaltigkeiten möglich. Diese Lösungen sind mit erhöhten Kosten verbunden. Diese Kosten sind für den Vorgang der Montage der Kamera notwendig, um eine hohe Genauigkeit zu erhalten, nicht aber für den Gebrauch der Kamera und werden dort mitgeschleppt.

Bei der nachfolgend beschriebenen Kamera des bevorzugten Ausführungsbeispiels wird zum Verbinden eines Leiterplattenverbundes, bestehend aus wenigstens zwei Leiterplatten und einem Leiterplattenrahmen aus Aluminium, oder auch einer Einzelleiterplatte mit Leiterplattenrahmen aus Aluminium ein Verblockmaterial verwendet. Der vordere Gehäuseteil der Kamera enthält Reservoire (Behälter) mit Pollern. Die Poller sind beispielsweise Stifte mit zerdrückter Spitze, ähnlich einem freiliegenden Niet. Damit sind die Poller Verbindungselemente mit Hinterschnitt. Der Leiterplattenrahmen enthält 4 Anker, die in die Reservoire eintauchen. Im bevorzugten Ausführungsbeispiel sind die Anker in den Leiterplattenrahmen eingeschraubten Schrauben ähnlich. Wichtig ist die Eigenschaft, dass beide, Poller und Anker, Hinterschnitte im Reservoir zur Verblockung bereitstellen. Die Verbindung durch das Verblockmaterial kommt nicht durch Klebung, sondern durch Verblockung der Elemente Poller und Anker zustande. Bevorzugt haben die Reservoire ein Fassungsvermögen von ca. 4-8mm³ Verblockungsmaterial, abhängig von den erreichbaren Fertigungsgenauigkeiten der Reservoire und des Gehäuses. Ferner wird das Fassungsvermögen an die im Betrieb der Kamera zu erwartenden Belastungen angepasst.

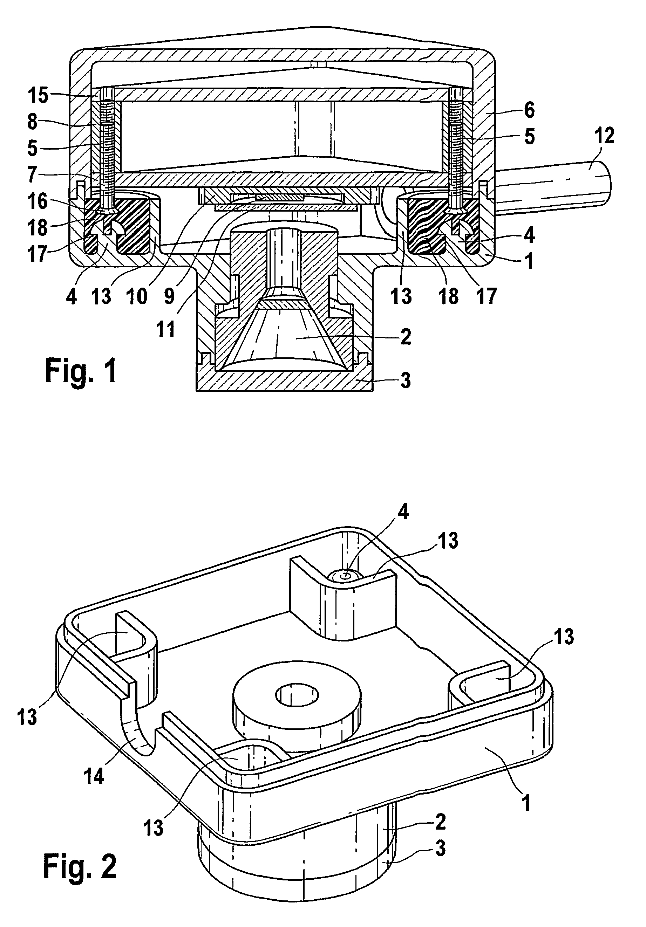

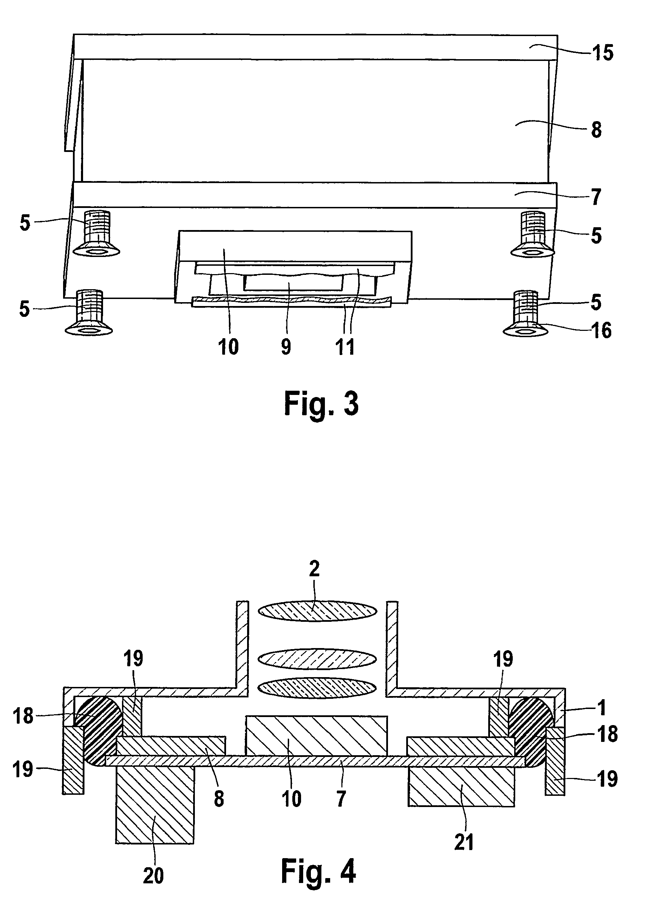

Figur 1 zeigt einen Querschnitt der Kamera des bevorzugten Ausführungsbeispiels, bestehend aus einem Gehäuse 1 und einem Bildwandelelement. Figur 2 zeigt eine perspektivische Ansicht des Gehäuses 1 der Kamera ohne Deckel und Bildwandelelement des bevorzugten Ausführungsbeispiels, bestehen aus vier Behältern 13 mit jeweils einem Poller 4. Figur 3 zeigt eine perspektivische Ansicht des Bildwandelelements der Kamera des ersten Ausführungsbeispiels, bestehend aus einem quaderförmigen Leiterplattenrahmen 8 und vier Ankern 5. Bezugnehmend auf die Figuren 1, 2 und 3 wird nachfolgend der Aufbau der Kamera beschrieben. Das Gehäuse 1 der Kamera ist im bevorzugten Ausführungsbeispiel ein Aluminium-Druckgussteil und hat eine im wesentlichen rechteckförmigen Grundfläche und auf der Grundfläche befindlichen Seitenflächen, die ins Kamerainnere eine Wanne bilden. Ferner weist die Grundfläche des Gehäuses 1 eine nach außen gewandte Ausstülpung auf, in der sich die Optikeinheit 2 der Kamera befindet. Die Optikeinheit 2 ist nach außen durch eine Optikeinheitabdeckung 3 abgedeckt, die im Betrieb entfernbar ist. Im Inneren des Gehäuses 1 befindet sich in jeder der vier Ecken der Grundfläche ein Behälter 13 (Reservoir). In jedem Behälter 13 befindet sich im wesentlichen senkrecht zur Grundfläche des Gehäuses 1 angeordnet ein Poller 4. Die vier Poller 4 sind im bevorzugten Ausführungsbeispiel nietenartige Bolzen mit Hinterschnitt 17. Der Hinterschnitt 17 befindet sich an der zur Befestigung des Bolzen am Gehäuse 1 abgewandten Seite. In einer Seitenwand des Gehäuses 1 ist eine Kabelöffnung 14 vorgesehen, durch die ein Stecker an einem Kabel 12 durch das Gehäuses 1 und den Deckel 6 hindurch nach außen geführt wird. Das Kabel 12 ist gegenüber der Kabelöffnung 14 abgedichtet. Ferner zeigt Figur 1 das Bildwandelelement, bestehend aus einer Verarbeitungsleiterplatte 15, einem Leiterplattenrahmen 8, einer Bildsensorleiterplatte 7, Ankern 5 und einem Bildsensor 10, umfassend den Bildsensorchip 9 und eine Glasabdeckung 11 (Glas-Lid). Über den Leiterplattenrahmen 8 sind die Verarbeitungsleiterplatte 15 und die Bildsensorleiterplatte 7 im wesentlichen parallel zueinander verbunden. Auf der nach außen gewandten Seite der Bildsensorleiterplatte 7 ist der Bildsensor 10 derart angebracht, dass der Bildsensorchip 9 zusammen mit der Optikeinheit 2 ein optisches System bilden. Der Bildsensor 10 wird von dem Bildsensorchip 9 gebildet, der von einer Glasabdeckung 11 zur Optikeinheit 2 abgedeckt ist. Die Elektronik zur Verarbeitung und Übertragung der erzeugten Bildinformationen findet sich auf den Leiterplatten 7, 15. In jeder Ecke des Leiterplattenrahmens 8, der aus Aluminium besteht, befinden sich im wesentlichen senkrecht zu der Bildsensorleiterplatte 7 auf der Seite des Bildsensors 10 vier Anker 5. Im bevorzugten Ausführungsbeispiel werden die Anker 5 von Senkkopfschrauben gebildet, die in den Leiterplattenrahmen 8 eingeschraubt sind. Alternativ oder zusätzlich sind die Anker 5 direkt an den Leiterplattenrahmen 8 angespritzt. Entscheidendes Element der Anker 5 ist der Hinterschnitt 16, der beliebig gebildet sein kann. Im bevorzugten Ausführungsbeispiel wird der Hinterschnitt 16 durch den Kopf der Senkkopfschrauben gebildet. Alternativ oder zusätzlich werden neben kegelförmigen Querschnitten der Hinterschnitte 16, 17 von Poller 4 und Anker 5 andere Querschnitte eingesetzt. Die Verbindung des Leiterplattenrahmens 8 mit dem Gehäuse 1 erfolgt derart, dass jeweils ein Anker 5 in einen Behälter 13 bis auf einen Abstand zum im Behälter 13 befindlichen Poller 4 von 0,5 mm bis 3,5 mm eintaucht, wobei der Behälter mit Verblockmaterial 18 ausgefüllt ist, so dass das Bildwandelelement mit dem Gehäuse 1 als weiteres Element der Kamera verblockt ist. Im bevorzugten Ausführungsbeispiel wird zur Verblockung ein ultraviolettvernetzendes Verblockmaterial 18 verwendet. Hierzu wurde das ultraviolettvernetzende Verblockmaterial 18 im flüssigen Zustand in die vier Behälter 13 gegossen, nachdem der Poller 4 und die Anker 5 entsprechend angenähert wurden.
Anschließend wurde das Verblockmaterial 18 mit Ultravioletter Strahlung (UV-Strahlung) ausgehärtet, so dass die Verblockung wirksam wurde. Im bevorzugten Ausführungsbeispiel überdecken sich die stirnseitigen Projektionsflächen eines Pollers 4 und eines zugehörigen Ankers 5 bei jeder einzelnen Verblockung mindestens zu 60%. Ein ebenfalls wannenförmiger Deckel 6 schließt den Innenraum der Kamera in Verbindung mit dem wannenförmigen Gehäuse 1 nach außen ab.

Figur 4 zeigt eine Übersichtszeichnung der Kamera des weiteren Ausführungsbeispiels, bestehend aus einem Gehäuse 1 und einem Bildwandelelement. Auch in diesem weiteren Ausführungsbeispiel besteht die Kamera aus einer Optikeinheit 2 und einem Bildsensor 10, der maßgenau zu dieser Optikeinheit 2 positioniert ist. Der Bildsensor 10 ist auf einer Bildsensorleiterplatte 7 befestigt, wobei der Bildsensor 10 einen Bildsensorchip, also das lichtempfindliche Silizium, in dem Gehäuse des Bildsensors 10 und eine lichtdurchlässige Schutzabdeckung enthält. Besondere Anforderungen an Maßhaltigkeiten von Bildsensorchip zu Schutzabdeckung und zu den elektrischen Anschlüssen auf der Unterseite des Bildsensors 10 und die Lage auf der Bildsensorleiterplatte 7 sind nicht gefordert. Ferner befindet sich auf der Bildsensorleiterplatte 7 die Elektronik 21, wie die Auswerteelektronik, sowie eine Buchse 20 für die Daten und die Energie, über welche die Bildsensorleiterplatte 7 angesteuert wird. Außerdem ist auf der Bildsensorleiterplatte 7 ein Leiterplattenrahmen 8 befestigt, der in diesem Ausführungsbeispiel mit dem Gehäuse 1 verbunden ist. In dem Gehäuse 1 und/oder im Leiterplattenrahmen 8 sind Erhebungen 19 und/oder Senkungen eingebracht. In diesem weiteren Ausführungsbeispiel sind sowohl im Gehäuse 1 also auch im Rahmen 8 Erhebungen 19 angebracht. Der Hohlraum zwischen dem Gehäuse 1 und dem Leiterplattenrahmen 8 wird in diesem Ausführungsbeispiel zumindest teilweise mit härtendem Füllmaterial als Verblockmaterial 18 angefüllt. Dabei ist die Menge und/oder die Einfülltechnik so gewählt, dass sich das Verblockmaterial 18 nicht zwischen Optikeinheit 2 und Bildsensor 10 und/oder bei einem leitenden Verblockmaterial 18 nicht auf der Bildsensorleiterplatte 7 befindet.
Während der nicht schrumpfenden Aushärtung des Verblockmaterials 18 wird der Leiterplattenrahmen 8, respektive der Bildsensor 10, mit dem Gehäuse 1, respektive zur Optikeinheit 2, spannungsfrei verbunden. Weil sich das Füllmaterial im Hohlraum zwischen den Erhebungen 19 und/oder den Senkungen verteilt, werden Gehäuse 1 und Leiterplattenrahmen 8 alleine durch Formschluss ohne Kraftschluss spannungsfrei verbunden.

In einer Variante der beschriebenen Ausführungsbeispiele wird alternativ oder zusätzlich zu dem Verblockmaterial, das durch Ultraviolette Strahlung verfestigt ist, ein Verblockmaterial eingesetzt, das mittels Kühlung verfestigbar ist und/oder ein Verblockmaterial, das aus zwei Komponenten besteht und durch zusammenbringen der beiden Komponenten verfestigt. Das Verblockmaterial hat vorzugsweise wenigstens eine der Eigenschaften, dass es schnell verfestigt, beispielsweise zwischen 10 Sekunden und 30 Sekunden, und/oder dass es homogen verfestigt, und/oder dass es gering schrumpfend ist bei Verfestigung, und/oder dass es keine Wechselwirkung mit anderen Materialen zeigt, also chemisch inert ist, und/oder nicht ausgast, und/oder einen kleinen Temperatur-Ausdehnungskoeffizienten hat.

In einer weiteren Variante des bevorzugten Ausführungsbeispiels wird der Bildsensor und/oder die Bildsensorplatine und/oder die Verarbeitungsplatine und/oder der Leiterplattenrahmen des Bildwandelelements mit wenigstens einem weiteren Element der Kamera, beispielsweise dem Gehäuse der Kamera und/oder der Optikeinheit der Kamera und/oder dem Deckel der Kamera durch wenigstens eine Verblockung verbunden.

Eine weitere Variante sieht vor, dass neben der Verblockung das Bildwandelelement und das wenigstens eine weitere Element der Kamera zusätzlich durch eine Klebeverbindung verbunden ist, wobei vorzugsweise die Klebeverbindung im Bereich der wenigstens einen Verblockung ist.

## Patentansprüche

1. Kamera, insbesondere für ein Kraftfahrzeug, mit wenigstens einem Bildwandelelement (9, 10, 11), wobei das Bildwandelelement (9, 10, 11) mit wenigstens einem weiteren Element (1, 2) der Kamera durch wenigstens eine Verblockung verbunden ist, wobei das Bildwandelelement (9,10, 11) wenigstens einen Anker (5) als Verbindungselement mit Hinterschnitt (16) umfasst, wobei der Anker (5) Bestandteil der Verblockung ist, **dadurch gekennzeichnet, dass** das weitere Element (1, 2) der Kamera wenigstens einen Behälter (13) mit einem Poller (4) als Verbindungselement mit Hinterschnitt (17) umfasst, wobei der Behälter (13) ein Verblockmaterial (18), den Anker (5) und den Poller (4) aufnimmt, so dass durch Verfestigung des Verblockmaterials (18) eine formschlüssige Verbindung erfolgt.

2. Kamera nach Anspruch 1, **dadurch gekennzeichnet, dass** der Anker (5) zylinderförmig ausgeführt ist und/oder der Hinterschnitt (16) senkkopfartig und/oder nagelkopfartig ausgeführt ist.

3. Kamera nach einem der vorhergehenden Ansprüche, **dadurch gekennzeichnet, dass** der Behälter (13) ein Fassungsvermögen von 4 mm³ bis 8 mm³ Verblockmaterial (18) hat.

4. Kamera nach einem der vorhergehenden Ansprüche, **dadurch gekennzeichnet, dass** das Verblockmaterial (18) mittels Ultraviolett-Strahlung verfestigt ist oder das Verblockmaterial (18) wenigstens zwei Komponenten umfasst, die durch Zusammenwirken die Verfestigung des Verblockmaterials (18) bewirken, oder das Verblockmaterial (18) mittels Kühlung verfestigt ist.

5. Kamera nach einem der vorhergehenden Ansprüche, **dadurch gekennzeichnet, dass** das Bildwandelelement (9, 10,11) und/oder das weitere Element (1, 2) der Kamera Mittel aufweist, welche die Verblockung gewährleisten, insbesondere, dass die Mittel Erhebungen (19) und/oder Senkungen umfassen, indem wenigstens ein Teil der Oberfläche des Bildwandelelements (9,10, 11) und/oder wenigstens ein Teil der Oberfläche des weiteren Elements (1, 2) der Kamera im Bereich der Verblockung Erhebungen (19) und/oder Senkungen aufweist.

6. Kamera nach einem der vorhergehenden Ansprüche, **dadurch gekennzeichnet, dass** das Bildwandelelement (9, 10, 11) und das weitere Element (1, 2) der Kamera zusätzlich durch eine Klebeverbindung verbunden sind, wobei vorzugsweise die Klebeverbindung im Bereich der Verblockung ist.

7. Kamera nach einem der vorhergehenden Ansprüche, **dadurch gekennzeichnet, dass** der kleinste Abstand zwischen dem Bildwandelelement (9, 10, 11) und dem weiteren Element (1, 2) der Kamera im Bereich der Verblockung zwischen 0,5 mm und 3,5 mm beträgt.

8. Kamera nach einem der vorhergehenden Ansprüche, **dadurch gekennzeichnet, dass** das Bildwandelelement (9, 10, 11) wenigstens einen Bildsensor (10) umfasst.

9. Kamera nach einem der vorhergehenden Ansprüche, **dadurch gekennzeichnet, dass** das wenigstens eine weitere Element (1, 2) der Kamera das Gehäuse (1) der Kamera und/oder die Optikeinheit (2) der Kamera ist.

## Claims

1. Camera, in particular for a motor vehicle, having at least one image converting element (9, 10, 11), the image converting element (9, 10, 11) being connected to at least further element (1, 2) of the camera by at least one interlock, the image converting element (9, 10, 11) comprising at least one anchor (5) as connecting element with undercut (16), the anchor (5) being a component of the interlock, **characterized in that** the further element (1, 2) of the camera comprises at least one container (13) having a post (4) as connecting element with undercut (17), the container (13) accommodating an interlocking material (18), the anchor (5) and the post (4) such that a form-fitting connection results by solidification of the interlocking material (18).

2. Camera according to Claim 1, **characterized in that** the anchor (5) is of cylindrical design, and/or the undercut (16) is designed in a manner of a countersunk head and/or nail head.

3. Camera according to one of the preceding claims, **characterized in that** the container (13) has a capacity of 4 mm³ to 8 mm³ of interlocking material (18).

4. Camera according to one of the preceding claims, **characterized in that** the interlocking material (18) is solidified by means of ultraviolet radiation, or the interlocking material (18) comprises at least two components which interact to solidify the interlocking material (18), or the interlocking material (18) is solidified by cooling.

5. Camera according to one of the preceding claims, **characterized in that** the image converting element (9, 10, 11) and/or the further element (1, 2) of the camera has means which ensure the interlocking, in particular that the means comprise elevations (19) and/or depressions by virtue of the fact that at least a part of the surface of the image converting element (9, 10, 11) and/or at least a part of the surface of the further element (1, 2) of the camera has elevations (19) and/or depressions in the region of the interlock.

6. Camera according to one of the preceding claims, **characterized in that** the image converting element (9, 10, 11) and the further element (1, 2) of the camera are additionally connected by an adhesive bond, the adhesive bond being in the region of the interlock.

7. Camera according to one of the preceding claims, **characterized in that** the smallest distance between the image converting element (9, 10, 11) and the further element (1, 2) of the camera is between 0.5 mm and 3.5 mm in the region of the interlock.

8. Camera according to one of the preceding claims, **characterized in that** the image converting element (9, 10, 11) comprises at least one image sensor (10).

9. Camera according to one of the preceding claims, **characterized in that** the at least one further element (1, 2) of the camera is the housing (1) of the camera and/or the optical unit (2).

## Revendications

1. Caméra, notamment destinée à un véhicule automobile comportant au moins un élément de conversion d'image (9, 10, 11),
l'élément de conversion d'image (9, 10, 11) étant relié à au moins un autre élément (1, 2) de la caméra par au moins un moyen de blocage,
l'élément de conversion d'image (9, 10, 11) ayant au moins un moyen d'ancrage (5) comme élément de liaison avec une partie en contredépouille (16),
le moyen d'ancrage (5) faisant partie du moyen de blocage,
**caractérisée en ce que**
l'autre élément (1, 2) de la caméra comprend au moins un réceptacle (13) muni d'une tige (4) comme élément de liaison ayant une partie en contredépouille (17),
le récipient (13) recevant un matériau de blocage (18), l'induit (5) et la tige (4) de sorte que la solidification du moyen de blocage (18) réalise une liaison par la forme.

2. Caméra selon la revendication 1,
**caractérisée en ce que**
l'induit (5) est de forme cylindrique et/ou la partie en contredépouille (16) est réalisée sous la forme d'une tête fraisée ou d'une tête de clou.

3. Caméra selon les revendications précédentes,
**caractérisée en ce que**
le réceptacle (13) a une capacité de 4 mm³ à 8 mm³ pour le matériau de blocage (18).

4. Caméra selon les revendications précédentes,
**caractérisée en ce que**
le matériau de blocage (18) est durci par rayonnement ultraviolet ou encore le matériau de blocage (18) comprend au moins deux composants qui en coopérant assurent la solidification du matériau de blocage (18) ou encore solidifient le matériau de blocage (18) par refroidissement.

5. Caméra selon les revendications précédentes,
**caractérisée en ce que**
l'élément de conversion d'image (9, 10, 11) et/ou l'autre élément (1, 2) de la caméra comporte des moyens qui assurent le blocage notamment des moyens comprenant des bossages (19) et/ou des parties en creux, **en ce qu'**au moins une partie de la surface de l'élément de conversion d'image (9, 10, 11) et au moins une partie de la surface supérieure de l'autre élément (1, 2) de la caméra présentent des bossages (19) et/ou des cavités dans la zone de blocage.

6. Caméra selon les revendications précédentes,
**caractérisée en ce que**
l'élément de conversion d'image (9, 10, 11) et l'autre élément (1, 2) de la caméra sont en outre reliés par une liaison collée et de préférence, la liaison collée se situe dans la zone du blocage.

7. Caméra selon les revendications précédentes,
**caractérisée en ce que**
la plus petite distance entre l'élément de conversion d'image (9, 10, 11) et l'autre élément (1, 2) de la caméra dans la zone du blocage se situe entre 0,5 mm et 3,5 mm.

8. Caméra selon les revendications précédentes,
**caractérisée en ce que**
l'élément de conversion d'image (9, 10, 11) comprend au moins un capteur d'image (10).

9. Caméra selon les revendications précédentes,
**caractérisée en ce qu'**
au moins un autre élément (1, 2) de la caméra est le boîtier (1) de la caméra et/ ou le système optique (2) de la caméra.
